# EUROPEAN PATENT SPECIFICATION

(11) **EP 2 914 810 B1**
(45) Date of publication and mention of the grant of the patent: **19.09.2018**
(21) Application number: 13871057.9
(22) Date of filing: 07.11.2013
(51) Int. Cl.: E21B 47/10, E21B 47/16, E21B 43/17, E21B 43/12, E21B 47/12

(54) **FIBEROPTIC SYSTEMS AND METHODS FOR SUBSURFACE EM FIELD MONITORING**
FASEROPTISCHE SYSTEME UND VERFAHREN ZUR ÜBERWACHUNG EINES UNTERIRDISCHEN ELEKTROMAGNETISCHEN FELDS
SYSTÈMES ET MÉTHODES À BASE DE FIBRES OPTIQUES POUR LA SURVEILLANCE SOUTERRAINE DE CHAMP EM

(30) Priority: 08.01.2013 US 201313736487
(43) Date of publication of application: 09.09.2015
(73) Proprietor: Halliburton Energy Services, Inc., Houston, TX 77072 (US)
(72) Inventor: SAN MARTIN, Luis, E., Houston, TX 77007 (US); SAMSON, Etienne, M., Cypress, TX 77433 (US); DONDERICI, Burkay, Houston, TX 77098 (US)
(74) Representative: Jennings, Michael John
(86) International application number: PCT/US2013/068844
(87) International publication number: WO 2014/109821

(56) References cited:
- CN-A- 102 031 960
- US-A1- 2002 027 004
- US-A1- 2006 005 965
- US-A1- 2009 151 935
- US-A1- 2010 017 137
- US-A1- 2010 212 962
- US-A1- 2011 036 569
- US-A1- 2012 031 610
- US-B1- 6 480 000

## Description

### BACKGROUND

Oil field operators drill boreholes into subsurface reservoirs to recover oil and other hydrocarbons. If the reservoir has been partially drained or if the oil is particularly viscous, the oil field operators will often stimulate the reservoir, e.g., by injecting water or other fluids into the reservoir via secondary wells to encourage the oil to move to the primary ('production') wells and thence to the surface. Other stimulation treatments include fracturing (creating fractures in the subsurface formation to promote fluid flow) and acidizing (enlarging pores in the formation to promote fluid flow).

The stimulation processes can be tailored with varying fluid mixtures, flow rates/pressures, and injection sites, but may nevertheless be difficult to control due to inhomogeneity in the structure of the subsurface formations. The production process for the desired hydrocarbons also has various parameters that can be tailored to maximize well profitability or some other measure of efficiency. Without sufficiently detailed information regarding the effects of stimulation processes on a given reservoir and the availability and source of fluid flows for particular production zones, the operator is sure to miss many opportunities for increased hydrocarbon recovery. US 6,480,000 B1 discloses a device for measuring resistivity in a petroleum reservoir in a geological formation comprising an electrically conductive metallic well tubing with an inductive transmitter antenna for generating electromagnetic waves outside of the metallic well tubing and inductive resistivity sensors also arranged outside of the metallic well tubing. US 2010/0212962 A1 proposes an assembly for drilling and logging comprising a device for electro pulse drilling (EPD device), a device to receive acoustic signals generated by the EPD device and separately one device to receive electromagnetic signals generated by the EPD device. US 2002/0027004 A1 discloses a method for controlling and monitoring injection zone and production zone parameters in order to control the injected fluid front to avoid breakthrough of the injected fluid to the production zone.

### BRIEF DESCRIPTION OF THE DRAWINGS

Accordingly, there are disclosed herein various fiberoptic systems and methods for subsurface electromagnetic ('EM') field monitoring suitable for detecting an approaching flood front. In the drawings:
Fig. 1 shows an illustrative environment for permanent monitoring.
Figs. 2A-2E show various illustrative injected-current system configurations.
Figs. 3A-3E show various illustrative sensing array configurations.
Fig. 4 shows yet another illustrative sensing array configuration.
Figs. 5A-5B show illustrative combined source-sensor cable configurations.
Fig. 6 is a function block diagram of an illustrative formation monitoring system.
Figs. 7A-7C show illustrative multiplexing architectures for distributed EM sensing.
Figs. 8A-8C show various illustrative EM field sensor configurations.
Fig. 9 is a signal flow diagram for an illustrative formation monitoring method.

It should be understood, however, that the specific embodiments given in the drawings and detailed description below do not limit the disclosure. On the contrary, they provide the foundation for one of ordinary skill to discern the alternative forms, equivalents, and other modifications that are encompassed in the scope of the appended claims.

### DETAILED DESCRIPTION

The following disclosure presents a fiberoptic-based technology suitable for use in permanent downhole monitoring environment to monitor subsurface electromagnetic ('EM') fields, enabling the characterization and monitoring of subsurface formation properties during stimulation and production from a reservoir, and further enabling action to optimize hydrocarbon recovery from a reservoir. One illustrative formation monitoring system has an array of electromagnetic field sensors positioned in an annular space around a well casing, the sensors being coupled to a surface interface via a fiberoptic cable. The sensor measurements in response to an injected current or another electromagnetic field source can be used to determine a resistivity distribution around the well, which in turn enables tracking of the flood front.

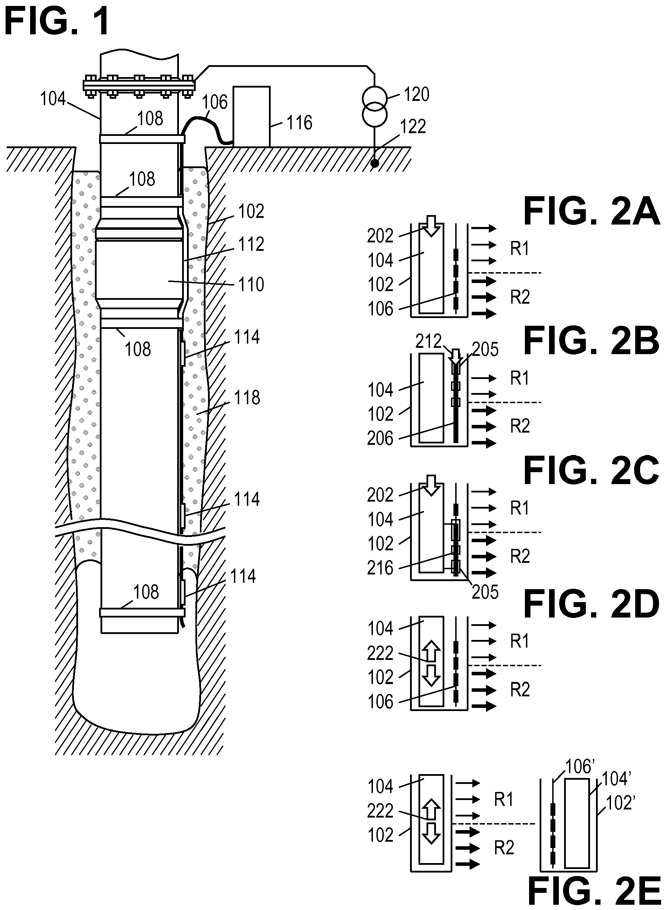

Turning now to the drawings, Fig. 1 shows an illustrative permanent downhole monitoring environment. A borehole 102 contains a casing string 104 with a fiber optic cable 106 secured to it by bands 108. Where the cable 106 passes over a casing joint 110, it may be protected from damage by a cable protector 112. Electromagnetic (EM) field sensors 114 are integrated into the cable 106 to obtain EM field measurements and communicate those measurements to a surface interface 116 via fiberoptic cable 106.

The remaining annular space may be filled with cement 118 to secure the casing 104 in place and prevent fluid flows in the annular space. Fluid enters the uncemented portion of the well (or alternatively, fluid may enter through perforated portions of the well casing) and reaches the surface through the interior of the casing. Note that this well configuration is merely illustrative and not limiting on the scope of the disclosure. Many production wells are provided with multiple production zones that can be individually controlled. Similarly, many injection wells are provided with multiple injection zones that can be individually controlled.

Surface interface 116 includes an optical port for coupling the optical fiber(s) in cable 106 to a light source and a detector. The light source transmits pulses of light along the fiber optic cable to sensors 114. The sensors 114 modify the light pulses to provide measurements of field strength, field gradient, or time derivative for electrical fields and/or magnetic fields. The modifications may affect amplitude, phase, or frequency content of the light pulses, enabling the detector to responsively produce an electrical output signal indicative of the sensor measurements. Some systems may employ multiple fibers, in which case an additional light source and detector can be employed for each fiber, or the existing source and detector may be switched periodically between the fibers.

Fig. 1 further shows a power source 120 coupled between the casing 104 and a remote earth electrode 122. Because the casing 104 is an electrically conductive material (e.g., steel), it acts as a source electrode for current flow into the formations surrounding the borehole 102. The magnitude and distribution of the current flow will vary in accordance with the source voltage and the formation's resistivity profile. The EM field measurements by sensors 114 will thus be representative of the resistivity profile. This resistivity profile in turn is indicative of the fluids in the formation pores, enabling the reservoir fluids to be tracked over time.

The surface interface 116 may be coupled to a computer that acts as a data acquisition system and possibly as a data processing system that analyzes the measurements to derive subsurface parameters and track them over time. In some contemplated system embodiments, the computer may further control production parameters to optimize production based on the information derived from the measurements. Production parameters may include the flow rate/pressure permitted from selected production zones, flow rate/pressure in selected injection zones, and the composition of the injection fluid, each of which can be controlled via computer controlled valves and pumps.

Generally, any such computer would be equipped with a user interface that enables a user to interact with the software via input devices such as keyboards, pointer devices, and touchscreens, and via output devices such as printers, monitors, and touchscreens. The software can reside in computer memory and on nontransient information storage media. The computer may be implemented in different forms including, e.g., an embedded computer permanently installed as part of the surface interface 116, a portable computer that is plugged into the surface interface 116 as desired to collect data, a remote desktop computer coupled to the surface interface 116 via a wireless link and/or a wired computer network, a mobile phone/PDA, or indeed any electronic device having a programmable processor and an interface for I/O.

Fig. 2A is a schematic representation of the system configuration in Fig. 1. It shows a borehole 102 having a casing 104 and a fiberoptic cable 106 (with an integrated sensor array) in the annular space. An injected current 202 flows along casing 104 and disperses into the surrounding formations as indicated by the arrows. Two formations are shown, labeled with their respective resistivities R1 and R2. The heavier arrows in the lower formation represent a larger current flow, indicating that resistivity R2 is lower than resistivity R1. Due to divergence pattern of the currents away from the casing, depth of investigation is typically around 5-15 feet.

Fig. 2B shows an alternative system configuration, in which the fiberoptic cable 106 is replaced by an alternative fiberoptic cable 206 having a conductor or a conductive layer to transport an injected current 212 along the cable. The conductor may be a protective metal tube within which the fiberoptic cable is placed. Alternatively, the conductor may be a wire (e.g., a strength member) embedded in the fiberoptic cable. As another alternative, a metal coating may be manufactured on the cable to serve as the current carrier. Parts of the cable may be covered with an insulator 205 to focus the current dispersal in areas of interest. The optical fiber in cable 212 may act as a distributed sensor or, as in previous embodiments, localized sensors may be integrated into the cable. Because conductive layers can significantly attenuate certain types of electromagnetic fields, the sensors are designed to be operable despite the presence of the conductive layer, e.g., magnetic field sensors, and/or apertures are formed in the conductive layer to permit the EM fields to reach the sensors.

Fig. 2C shows another alternative system configuration. A conductor or conductive layer of fiberoptic cable 206 is electrically coupled to casing 104 to share the same electrical potential and contribute to the dispersal of current into the formation. Parts of the cable 206 and/or casing 104 may be covered with an insulator 205 to focus the current dispersal in areas of interest.

Fig. 2D shows yet another alternative system configuration. Rather than providing an injected current 202 from the surface as in Fig. 2A, the configuration of Fig. 2D provides an injected current 222 from an intermediate point along the casing 104. Such a current may be generated with an insulated electrical cable passing through the interior of casing 104 from a power source 120 (Fig. 1) to a tool that makes electrical contact at the intermediate point, e.g., via extendible arms. (An alternative approach employs a toroid around casing 104 at the intermediate point to induce current flow along the casing. The toroid provides an electric dipole radiation pattern rather than the illustrated monopole radiation pattern.)

Fig. 2E shows still another alternative system configuration having a first borehole 102 and second borehole 102'. Casing 104 in the first borehole 102 carries an injected current from the surface or an intermediate point and disperses it into the surrounding formations. The second borehole 102' has a casing 104' for producing hydrocarbons and further includes a fiberoptic cable 106' with an integrated EM sensor array in the annular space around casing 104'. The EM sensors provide measurements of the fields resulting from the currents dispersed in the formations.

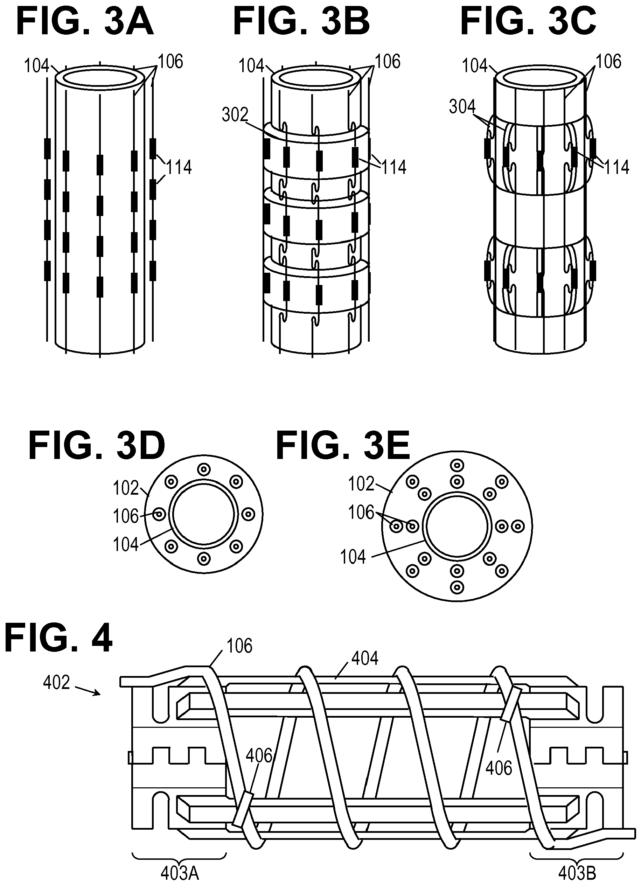

The sensor array may employ multiple fiberoptic cables 106 as indicated in Fig. 3A. The azimuthal arrangement of sensors 114 enables a multi-dimensional mapping of the electromagnetic fields. In some embodiments, the sensors are mounted to the casing 104 or suspended on fins or spacers to space them away from the body of casing 104. If actual contact with the formation is desired, the sensors 114 may be mounted on swellable packers 302 as indicated in Fig. 3B. Such packers 302 expand when exposed to downhole conditions, pressing the sensors 114 into contact with the borehole wall. Fig. 3C shows the use of bow-spring centralizers 304 which also operate to press the sensors 114 into contact with the borehole walls. To minimize insertion difficulties, a restraining mechanism may hold the spring arms 304 against the casing 104 until the casing has been inserted in the borehole. Thereafter, exposure to downhole conditions or a circulated fluid (e.g., an acid) degrades the restraining mechanism and enables the spring arms to extend the sensors against the borehole wall. If made of conductive material, the spring arms may further serve as current injection electrodes, concentrating the measurable fields in the vicinity of the sensors. To further concentrate the fields, the spring arms outside the zone of interest may be insulated.

Other extension mechanisms are known in the oilfield and may be suitable for placing the sensors 114 in contact with the borehole wall or into some other desired arrangements such as those illustrated in Fig. 3D and 3E. In Fig. 3D, the sensors are positioned near the radial midpoint of the annular region. In Fig. 3E, the sensors are placed in a spatial distribution having axial, azimuthal, and radial variation. Balloons, hydraulic arms, and projectiles are other contemplated mechanisms for positioning the sensors.

Fig. 4 shows an illustrative fixed positioning mechanism for sensors 114. The cage 402 includes two clamps 403A, 403B joined by six ribs 404. The fiberoptic cable(s) 106 can be run along the ribs or, as shown in Fig. 4, they can be wound helically around the cage. In either case, the ribs provide each fiberoptic cable 106 some radial spacing from the casing 104. Cable ties 406 can be used to hold the cable in place until cementing has been completed.

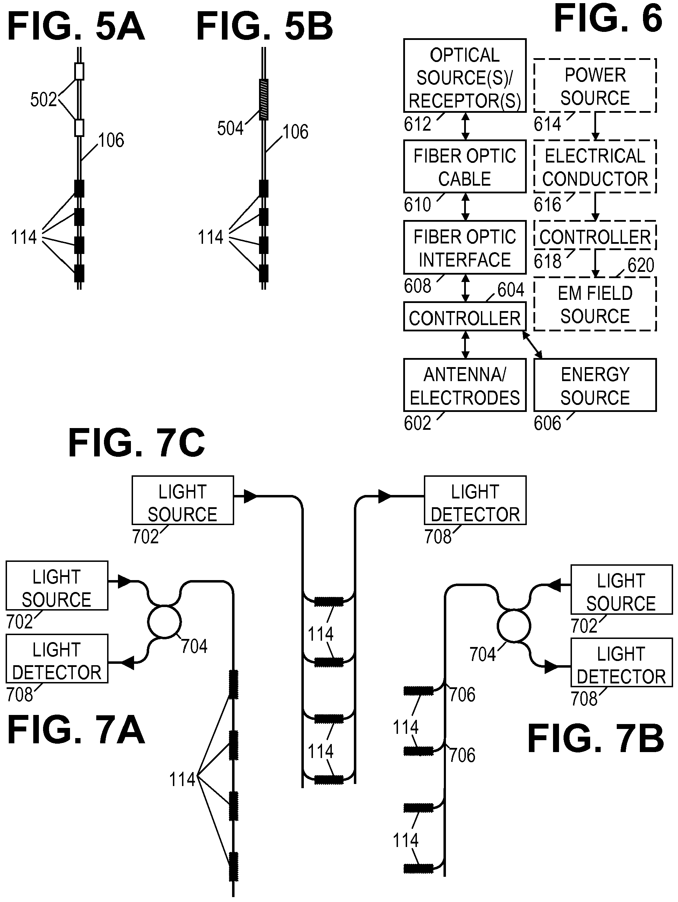

In addition to providing support and communications for sensors 114, the fiberoptic cable 106 may support electrodes or antennas for generating electromagnetic fields in the absence of current injection via casing 104. Fig. 5A shows two electrodes 502 on cable 106. A voltage is generated between the two electrodes 502 to create an electric dipole radiation pattern. The response of the electromagnetic sensors 114 can then be used to derive formation parameters.

Similarly, Fig. 5B shows a solenoid antenna 504 on cable 106. A current is supplied to the solenoid coil to create a magnetic dipole radiation pattern. The response of the electromagnetic sensors 114 can then be used to derive formation parameters. In both cases the sensors are shown to one side of the source, but this is not a requirement. The source may be positioned between sensors 114 and/or one or more of the sensors may be positioned between multiple sources. The sensors 114 may even be positioned between the electrodes of an electric dipole source. Moreover, it is possible to tilt the sources and/or the sensors to provide improved directional sensitivity.

Fig. 6 provides a function block representation of an illustrative fiberoptic-based permanent monitoring system. The sensors 114 include electrodes, antennas, or other transducers 602 that convert a property of the surrounding electromagnetic field into a signal that can be sensed via an optical fiber. (Specific examples are provided further below.) An energy source 606 may be provided in the form of a pair of conductors conveying power from the surface or in the form of a powerful downhole battery that contains enough energy to make the device operate for the full life span. It is possible to use an energy saving scheme to turn on or off the device periodically. It is also possible to adjust the power level based on inputs from the fiber optic cable, or based on the sensor inputs.

A controller 604 provides power to the transducers 602 and controls the data acquisition and communication operations and may contain a microprocessor and a random access memory. Transmission and reception can be time activated, or may be based on a signal provided through the optic cable or casing. A single sensor module may contain multiple antennas/electrodes that can be activated sequentially or in parallel. After the controller 604 obtains the signal data, it communicates the signal to the fiberoptic interface 608. The interface 608 is an element that produces new optical signals in fiberoptic cable 610 or modifies existing optical signals in the cable 610. For example, optical signal generation can be achieved by the use of LEDs or any other type of optical source. As another example, optical signals that are generated at the surface can be modified by thermal or strain effects on the optical fiber in cable 610. Thermal effects can be produced by a heat source or sink, whereas strain effects can be achieved by a piezoelectric device or a downhole electrical motor.

Modification can occur via extrinsic effects (i.e., outside the fiber) or intrinsic effects (i.e., inside the fiber). An example of the former technique is a Fabry Perot sensor, while an example of the latter technique is a Fiber Bragg Grating. For optimum communication performance, the signal in the optical transmission phase may be modulated, converted to digital form, or digitally encoded. The cable is coupled to a receiver or transceiver 612 that converts the received light signals into digital data. Stacking of sequential measurements may be used to improve signal to noise ratio. The system can be based on either narrowband (frequency type) sensing or ultra wideband (transient pulse) sensing. Narrowband sensing often enables the use of reduced-complexity receivers, whereas wideband sensing may provide more information due to the presence of a wider frequency band.

Optionally, a power source 614 transmits power via an electrical conductor 616 to a downhole source controller 618. The source controller 618 operates an EM field source 620 such as an electric or magnetic dipole. Multiple such sources may be provided and operated in sequence or in parallel at such times and frequencies as may be determined by controller 618.

Multiple sensors 114 may be positioned along a given optical fiber. Time and/or frequency multiplexing is used to separate the measurements associated with each sensor. In Fig. 7A, a light source 702 emits light in a continuous beam. A circulator 704 directs the light along fiberoptic cable 106. The light travels along the cable 106, interacting with a series of sensors 114, before reflecting off the end of the cable and returning to circulator 704 via sensors 114. The circulator directs the reflected light to a light detector 708. The light detector 708 separates the measurements associated with different sensors 114 via frequency multiplexing. That is, each sensor 114 affects only a narrow frequency band of the light beam, and each sensor is designed to affect a different frequency band.

In Fig. 7B, light source 702 emits light in short pulses. Each sensor 114 is coupled to the main optical fiber via a splitter 706. The splitters direct a small fraction of the light from the optical fiber to the sensor, e.g., 1% to 4%. The sensor 114 interacts with the light and reflects it back to the detector 708 via the splitter, the main fiber, and the circulator. Due to the different travel distances, each pulse of light from source 702 results in a sequence of return pulses, with the first pulse arriving from the nearest sensor 114, the second pulse arriving from the second nearest sensor, etc. This arrangement enables the detector to separate the sensor measurements on a time multiplexed basis.

The arrangements of Fig. 7A and 7B are both reflective arrangements in which the light reflects from a fiber termination point. They can each be converted to a transmissive arrangement in which the termination point is replaced by a return fiber that communicates the light back to the surface. Fig. 7C shows an example of such an arrangement for the configuration of Fig. 7B. A return fiber is coupled to each of the sensors via a splitter to collect the light from the sensors 114 and direct it to a light detector 708.

Other arrangement variations also exist. For example, multiple sensors may be coupled in series on each branch of the Fig. 7B, 7C arrangements. A combination of time division and frequency division multiplexing could be used to separate the individual sensor measurements.

Thus each production well may be equipped with a permanent array of sensors distributed along axial, azimuthal and radial directions outside the casing. The sensors may be positioned inside the cement or at the boundary between cement and the formation. Each sensor is either on or in the vicinity of a fiber optic cable that serves as the communication link with the surface. Sensor transducers can directly interact with the fiber optic cables or, in some contemplated embodiments, may produce electrical signals that in turn induce thermal, mechanical (strain), acoustic or electromagnetic effects on the fiber. Each fiber optic cable may be associated with multiple EM sensors, while each sensor may produce a signal in multiple fiber optic or fiber optic cables. Even though the figures show uniformly-spaced arrays, the sensor positioning can be optimized based on geology or made randomly. In any configuration, the sensor positions can often be precisely located by monitoring the light signal travel times in the fiber.

Cement composition may be designed to enhance the sensing capability of the system. For example, configurations employing the casing as a current source electrode can employ a cement having a resistivity equal to or smaller than the formation resistivity.

The sensors 114 referenced above preferably employ fully optical means to measure EM fields and EM field gradients and transfer the measurement information through optical fibers to the surface for processing to extract the measurement information. The sensors will preferably operate passively, though in many cases sensors with minimal power requirements can be powered from small batteries. The minimization of electronics or downhole power sources provides a big reliability advantage. Because multiple sensors can share a single fiber, the use of multiple wires with associated connectors and/or multiplexers can also be avoided, further enhancing reliability while also reducing costs.

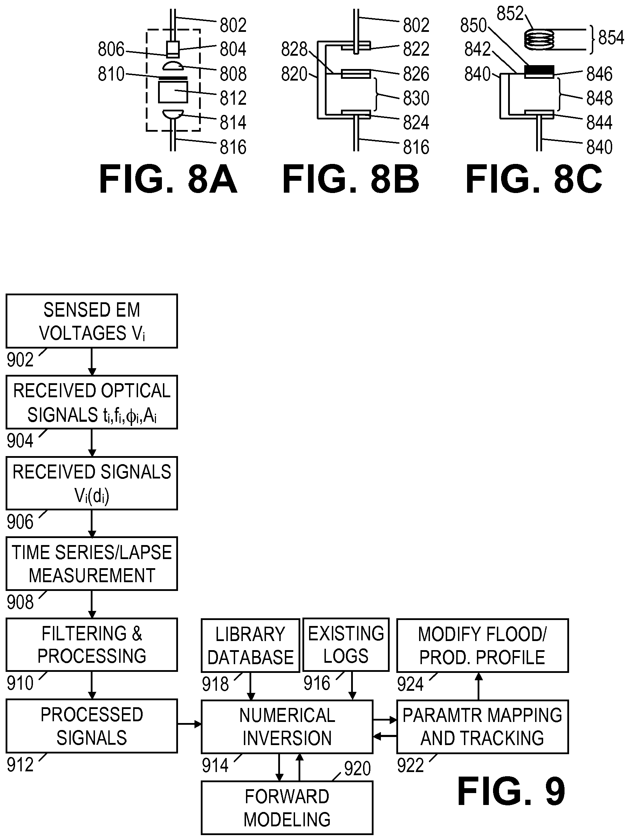

Several illustrative fiberoptic sensor configurations are shown in Figs. 8A-8C. Fig. 8A shows an atomic magnetometer configuration in which light from an input fiber 802 passes through a depolarizer 804 (to remove any polarization biases imposed by the fiber) and a polarizing filter 806 to produce polarized light. A gradient index (GRIN) lens 808 collimates the polarized light before it passes through an alkali vapor cell 812. A quarter-wave plate 810 enhances optical coupling into the cell. A second GRIN lens 814 directs light exiting the cell into an output fiber 816. The light passing through the cell consists of a pump pulse to polarize the alkali atoms, followed by a probe pulse to measure the spin relaxation rate. The attenuation of the probe pulse is directly related to the magnetic field strength.

Fig. 8B shows a sensor having a support structure 820 separating two electrodes 822, 824. A center electrode 826 is supported on a flexible arm 828. The center electrode 826 is provided with a set charge that experiences a force in the presence of an electrical field between electrodes 822, 824. The force causes displacement of the center electrode 826 until a restoring force of the compliant arm 828 balances the force from the electrical field. Electrodes 824 and 826 are at least partially transparent, creating a resonant cavity 830 in the space between. The wavelengths of light that are transmitted and suppressed by the cavity 830 will vary based on displacement of center electrode 826. Thus the resonant cavity shapes the spectrum of light from input electrode 802, which effect can be seen in the light exiting from output fiber 816. The electrodes 822, 824 may be electrically coupled to a pair of spaced-apart electrodes (for electric field sensing) or to the terminals of a magnetic dipole antenna (for magnetic field sensing).

Fig. 8C shows a sensor having a support structure 840 with a flexible arm 842 that supports a mirror 846 above a window 844 to define a cavity 848. The arm further includes a magnet 850 or other magnetically responsive material that experiences a displacing force in response to a magnetic field from a coil 852. The coil's terminals 854 are coupled to spaced-apart electrodes (for electric field sensing) or another coil (for magnetic field sensing). Light entering the cavity 848 from fiber 840 reflects from mirror 846 and returns along fiber 840 to the surface. Displacement of the arm 842 alters the travel time and phase of the light passing along fiber 840.

The foregoing sensors are merely illustrative examples and not limiting on the sensors that can be employed in the disclosed systems and methods. An interrogation light pulse is sent from the surface through the fiber and, when the pulse reaches a sensor, it passes through the sensor and the light is modified by the sensor in accordance with the measured electromagnetic field characteristic. The measurement information is encoded in the output light and travels through the fiber to a processing unit located at the surface. In the processing unit the measurement information is extracted.

Fig. 9 provides an overview of illustrative formation monitoring methods. A controlled electromagnetic field source generates a subsurface electromagnetic field. While it is possible for this field to be a fixed (DC) field, it is expected that better measurements will be achievable with an alternating current (AC) field having a frequency in the range of 1 Hz to 100 kHz. In block 902, each of the sensors convert the selected characteristic of the electromagnetic field into a sensed voltage *Vᵢ*, where *i* is the sensor number. For energy efficiency, sensors can be activated and measurements can be taken periodically. This enables long-term monitoring applications (such as water-flood movements), as well as applications where only small number of measurements are required (fracturing). For further efficiency, different sets of sensors may be activated in different periods.

In block 904, the voltage (or electric field or magnetic field or electric/magnetic field gradient) is applied to modify some characteristic of light passing through an optical fiber, e.g., travel time, frequency, phase, amplitude. In block 906, the surface receiver extracts the represented voltage measurements and associates them with a sensor position *dᵢ*. The measurements are repeated and collected as a function of time in block 908. In block 910, a data processing system filters and processes the measurements to calibrate them and improve signal to noise ratio. Suitable operations include filtering in time to reduce noise; averaging multiple sensor data to reduce noise; taking the difference or the ratio of multiple voltages to remove unwanted effects such as a common voltage drift due to temperature; other temperature correction schemes such as a temperature correction table; calibration to known/expected resistivity values from an existing well log; and array processing (software focusing) of the data to achieve different depth of detection or vertical resolution.

In block 912, the processed signals are stored for use as inputs to a numerical inversion process in block 914. Other inputs to the inversion process are existing logs (block 916) such as formation resistivity logs, porosity logs, etc., and a library of calculated signals 918 or a forward model 920 of the system that generates predicted signals in response to model parameters, e.g., a two- or three-dimensional distribution of resistivity. As part of generating the predicted signals, the forward model determines a multidimensional model of the subsurface electromagnetic field. All resistivity, electric permittivity (dielectric constant) or magnetic permeability properties of the formation can be measured and modeled as a function of time and frequency. The parameterized model can involve isotropic or anisotropic electrical (resistivity, dielectric, permeability) properties. More complex models can be employed so long as sufficient numbers of sensor types, positions, orientations, and frequencies are employed. The inversion process searches a model parameter space to find the best match between measured signals 912 and generated signals. In block 922 the parameters are stored and used as a starting point for iterations at subsequent times.

Effects due to presence of tubing, casing, mud and cement can be corrected by using a-priori information on these parameters, or by solving for some or all of them during the inversion process. Since all of these effects are mainly additive and they remain the same in time, a time-lapse measurement can remove them. Multiplicative (scaling) portion of the effects can be removed in the process of calibration to an existing log. All additive, multiplicative and any other non-linear effect can be solved for by including them in the inversion process as a parameter.

The motion of reservoir fluid interfaces can be derived from the parameters and used as the basis for modifying the production profile in block 924. Production from a well is a dynamic process and each production zone's characteristics may change over time. For example, in the case of water flood injection from a second well, water front may reach some of the perforations and replace the existing oil production. Since flow of water in formations is not very predictable, stopping the flow before such a breakthrough event requires frequent monitoring of the formations.

Profile parameters such as flow rate/pressure in selected production zones, flow rate/pressure in selected injection zones, and the composition of the injection fluid, can each be varied. For example, injection from a secondary well can be stopped or slowed down when an approaching water flood is detected near the production well. In the production well, production from a set of perforations that produce water or that are predicted to produce water in relatively short time can be stopped or slowed down.

We note here that the time lapse signal derived from the receiver signals is expected to be proportional to the contrast between formation parameters. Hence, it is possible to enhance the signal created by an approaching flood front by enhancing the electromagnetic contrast of the flood fluid relative to the connate fluid. For example, a high magnetic permeability, or electrical permittivity or conductivity fluid can be used in the injection process in the place of or in conjunction with water. It is also possible to achieve a similar effect by injecting a contrast fluid from the wellbore in which monitoring is taking place, but this time changing the initial condition of the formation.

The disclosed systems and methods may offer a number of advantages. They may enable continuous time-lapse monitoring of formations including a water flood volume. They may further enable optimization of hydrocarbon production by enabling the operator to track flows associated with each perforation and selectively block water influxes. Precise localization of the sensors is not required during placement since that information can be derived afterwards via the fiber optic cable. Casing source embodiments do not require separate downhole EM sources, significantly decreasing the system cost and increasing reliability.

## Claims

1. A subsurface electromagnetic field monitoring system that comprises:
a controlled source that generates said subsurface electromagnetic field by injecting a distributed current (202,222) via a casing (104) in said borehole (102) or via a casing in a second borehole;
at least one fiberoptic cable (106) that optically communicates measurements from an array of electromagnetic field sensors (114) in an annular space between the casing (104) and a wall of a borehole (102 a data processing system that receives said measurements and responsively determines a multi-dimensional model of formation resistivity or conductivity based at least in part on said subsurface electromagnetic field, and the data processing system determines a fluid interface location based at least in part on the multi-dimensional model of formation resistivity or conductivity.

2. The system of claim 1, further comprising the controlled source that generates said subsurface electromagnetic field, wherein the controlled source is an electric dipole source positioned in the annular space between the casing (104) and the wall of said borehole (102).

3. The system of claim 1, further comprising a controlled source that generates said subsurface electromagnetic field, wherein the controlled source is a magnetic dipole source positioned in the annular space between the casing (104) and the wall of said borehole (102).

4. The system of claim 1, wherein said sensors (114) each provide a measure of magnetic field strength or gradient and said sensors are atomic magnetometers.

5. The system of claim 1, wherein said sensors (114) each provide a measure of magnetic field strength or gradient and said sensors (114) include a magnetic element that displaces a reflective surface in response to the magnetic field.

6. The system of claim 1, wherein said sensors (114) each provide a measure of a magnetic field derivative and said sensors (114) include a coil antenna (852).

7. The system of claim 1, wherein said sensors (114) each provide a measure of electric field strength.

8. The system of claim 7, wherein said sensors (114) include a charged element (826) that displaces a reflective surface in response to the electric field.

9. A subsurface electromagnetic field monitoring method that comprises:
generating said subsurface electromagnetic field by injecting a distributed current (202,222) via a casing (104) in said borehole (102) or via a casing in a second borehole;
receiving (902) measurements from an array of electromagnetic field sensors (114) via a fiberoptic cable (106) in an annular space between the casing (104) and a wall of a borehole (102);
modeling a subsurface electromagnetic field based on estimated formation resistivity or conductivity to predict said measurements;
adjusting the estimated formation resistivity or conductivity to improve a match between predicted measurements and received measurements for determining a fluid interface location based at least in part on the modelling of formation resistivity or conductivity; and
displaying the estimated formation resistivity or conductivity after matching the predicted measurements to the received measurements.

10. The method of claim 9, further comprising deriving a location of a fluid front from the estimated formation resistivity or conductivity.

11. The method of claim 9, wherein said sensors (114) each include an atomic magnetometer.

12. The method of claim 9, wherein said sensors (114) each include a coil antenna (852).

## Patentansprüche

1. System zur Überwachung eines unterirdischen elektromagnetischen Felds, das Folgendes umfasst:
eine gesteuerte Quelle, die das unterirdische elektromagnetische Feld durch Einspritzen eines verteilten Stroms (202, 222) über ein Gehäuse (104) in das Bohrloch (102) oder über ein Gehäuse in ein zweites Bohrloch erzeugt;
zumindest ein faseroptisches Kabel (106), das Messungen von einer Reihe an elektromagnetischen Feldsensoren (114) in einem ringförmigen Raum zwischen dem Gehäuse (104) und einer Wand eines Bohrlochs (102 optisch kommuniziert, ein Datenverarbeitungssystem, das die Messungen empfängt und als Reaktion ein mehrdimensionales Modell an Formationswiderstandsfähigkeit oder -leitfähigkeit zumindest teilweise auf Grundlage des unterirdischen elektromagnetischen Felds bestimmt, und wobei das Datenverarbeitungssystem einen Fluidschnittstellenpunkt zumindest teilweise auf Grundlage des mehrdimensionalen Modells an Formationswiderstandsfähigkeit oder -leitfähigkeit bestimmt.

2. System nach Anspruch 1, ferner umfassend die gesteuerte Quelle, die das unterirdische elektromagnetische Feld erzeugt, wobei die gesteuerte Quelle eine elektrische Dipolquelle ist, die in dem ringförmigen Raum zwischen dem Gehäuse (104) und der Wand des Bohrlochs (102) positioniert ist.

3. System nach Anspruch 1, ferner umfassend eine gesteuerte Quelle, die das unterirdische elektromagnetische Feld erzeugt, wobei die gesteuerte Quelle eine magnetische Dipolquelle ist, die in dem ringförmigen Raum zwischen dem Gehäuse (104) und der Wand des Bohrlochs (102) positioniert ist.

4. System nach Anspruch 1, wobei die Sensoren (114) jeweils eine Messung von magnetischer Feldstärke oder -gradient bereitstellen und die Sensoren atomische Magnetometer sind.

5. System nach Anspruch 1, wobei die Sensoren (114) jeweils eine Messung von magnetischer Feldstärke oder -gradient bereitstellen und die Sensoren (114) ein magnetisches Element beinhalten, das eine reflektierende Fläche als Reaktion auf das magnetische Feld verschiebt.

6. System nach Anspruch 1, wobei die Sensoren (114) jeweils eine Messung eines magnetischen Feldderivats bereitstellen und die Sensoren (114) eine Spulenantenne (852) beinhalten.

7. System nach Anspruch 1, wobei die Sensoren (114) jeweils eine Messung von elektrischer Feldstärke bereitstellen.

8. System nach Anspruch 7, wobei die Sensoren (114) ein geladenes Element (826) beinhalten, das eine reflektierende Fläche als Reaktion auf das elektrische Feld verschiebt.

9. Verfahren zur Überwachung eines unterirdischen elektromagnetischen Felds, das Folgendes umfasst:
Erzeugen des unterirdischen elektromagnetischen Felds durch Einspritzen eines verteilten Stroms (202, 222) über ein Gehäuse (104) in das Bohrloch (102) oder über ein Gehäuse in ein zweites Bohrloch;
Empfangen (902) von Messungen von einer Reihe an elektromagnetischen Feldsensoren (114) über ein faseroptisches Kabel (106) in einem ringförmigen Raum zwischen dem Gehäuse (104) und einer Wand eines Bohrlochs (102);
Modellieren eines unterirdischen elektromagnetischen Felds auf Grundlage von geschätzter Formationswiderstandsfähigkeit oder - leitfähigkeit, um die Messungen vorherzusagen;
Anpassen der geschätzten Formationswiderstandsfähigkeit oder - leitfähigkeit, um eine Zuordnung zwischen vorhergesagten Messungen und empfangenen Messungen zu verbessern, um einen Fluidschnittstellenpunkt zumindest teilweise auf Grundlage des Modellierens von Formationswiderstandsfähigkeit oder - leitfähigkeit zu bestimmen; und
Anzeigen der geschätzten Formationswiderstandsfähigkeit oder - leitfähigkeit nach dem Zuordnen der vorhergesagten Messungen zu den empfangenen Messungen.

10. Verfahren nach Anspruch 9, ferner umfassend das Ableiten eines Punktes einer Fluidfront von der geschätzten Formationswiderstandsfähigkeit oder -leitfähigkeit.

11. Verfahren nach Anspruch 9, wobei die Sensoren (114) jeweils ein atomisches Magnetometer beinhalten.

12. Verfahren nach Anspruch 9, wobei die Sensoren (114) jeweils eine Spulenantenne (852) beinhalten.

## Revendications

1. Système pour la surveillance souterraine de champ électromagnétique, comprenant :
une source commandée qui génère ledit champ électromagnétique souterrain en injectant un courant distribué (202, 222) par l'intermédiaire d'un tubage (104) dans ledit trou de forage (102) ou par l'intermédiaire d'un tubage dans un second trou de forage ;
au moins un câble à fibres optiques (106) qui communique de manière optique les mesures à partir d'un réseau de capteurs de champ électromagnétique (114) dans un espace annulaire entre le tubage (104) et une paroi d'un trou de forage (102) à un système de traitement de données qui reçoit lesdites mesures et détermine en réponse un modèle multidimensionnel de résistivité ou de conductivité de la formation sur la base, au moins en partie, dudit champ électromagnétique souterrain, et le système de traitement de données détermine un emplacement d'interface de fluide sur la base, au moins en partie, d'un modèle multidimensionnel de résistivité ou de conductivité de la formation.

2. Système selon la revendication 1, comprenant en outre la source commandée qui génère ledit champ électromagnétique souterrain, la source commandée étant une source dipôle électrique positionnée dans l'espace annulaire entre le tubage (104) et la paroi dudit trou de forage (102).

3. Système selon la revendication 1, comprenant en outre une source commandée qui génère ledit champ électromagnétique souterrain, la source commandée étant une source dipôle magnétique positionnée dans l'espace annulaire entre le tubage (104) et la paroi dudit trou de forage (102).

4. Système selon la revendication 1, dans lequel lesdits capteurs (114) fournissent chacun une mesure de la force ou du gradient de champ magnétique et lesdits capteurs sont des magnétomètres atomiques.

5. Système selon la revendication 1, dans lequel lesdits capteurs (114) fournissent chacun une mesure de la force ou du gradient de champ magnétique et lesdits capteurs (114) comprennent un élément magnétique qui déplace une surface réfléchissante en réponse au champ magnétique.

6. Système selon la revendication 1, dans lequel lesdits capteurs (114) fournissent chacun une mesure d'un dérivé de champ magnétique et lesdits capteurs (114) comprennent une antenne bobinée (852).

7. Système selon la revendication 1, dans lequel lesdits capteurs (114) fournissent chacun une mesure de la force de champ magnétique.

8. Système selon la revendication 7, dans lequel lesdits capteurs (114) comprennent un élément chargé (826) qui déplace une surface réfléchissante en réponse au champ électrique.

9. Procédé de surveillance souterraine de champ électromagnétique comprenant :
la génération dudit champ électromagnétique souterrain en injectant un courant distribué (202, 222) par l'intermédiaire d'un tubage (104) dans ledit trou de forage (102) ou par l'intermédiaire d'un tubage dans un second trou de forage ;
la réception (902) de mesures à partir d'un réseau de capteurs de champ électromagnétique (114) par l'intermédiaire d'un câble à fibres optiques (106) dans un espace annulaire entre le tubage (104) et une paroi d'un trou de forage (102) ;
la modélisation d'un champ électromagnétique souterrain sur la base de la résistivité ou de la conductivité estimée de la formation pour prédire lesdites mesures ;
l'ajustement de la résistivité ou de la conductivité estimée de la formation pour améliorer une association entre des mesures prédites et des mesures reçues pour déterminer un emplacement d'interface de fluide sur la base, au moins en partie, de la modélisation de la résistivité ou de la conductivité de la formation ; et
l'affichage de la résistivité ou de la conductivité estimée de la formation après l'association des mesures prédites aux mesures reçues.

10. Procédé selon la revendication 9, comprenant en outre la dérivation d'un emplacement d'un front de fluide à partir de la résistivité ou de la conductivité estimée de la formation.

11. Procédé selon la revendication 9, dans lequel lesdits capteurs (114) comprennent chacun un magnétomètre atomique.

12. Procédé selon la revendication 9, dans lequel lesdits capteurs (114) comprennent chacun une antenne bobinée (852).
